# EUROPEAN PATENT APPLICATION

(11) **EP 4 610 915 A1**
(43) Date of publication of application: **03.09.2025**
(21) Application number: 24160731.6
(22) Date of filing: 29.02.2024
(51) Int. Cl.: G06Q 40/02, G06N 3/044, G06N 3/08, G06Q 20/40

(54) **CONTROLLING AND TRAINING ANALYTICS SYSTEMS**

(71) Applicant: Featurespace Limited, Cambridge, Cambridgeshire CB4 0GF (GB)
(72) Inventor: SUTTON, David, Cambridge, CB4 0GF (GB); PEREZ, Iker, Cambridge, CB4 0GF (GB); SKALSKI, Piotr, Cambridge, CB4 0GF (GB); BURRELL, Stuart, Cambridge, CB4 0GF (GB); WONG, Jason, Cambridge, CB4 0GF (GB); PARAMESWARAN, Kamalaruban, Cambridge, CB4 0GF (GB)
(74) Representative: Mishcon de Reya LLP

(57) **Abstract**

Payment request data is obtained. The payment request data represents a requested electronic payment from an originating account to a beneficiary account. The originating and beneficiary accounts are both maintained by financial institutions. State for the beneficiary account is obtained using the payment request data. The state for the beneficiary account is based on historical payments involving the beneficiary account. A beneficiary account embedding is generated by providing the payment request data and the state for the beneficiary account as input to an embedding model. An account representation is generated by providing the beneficiary account embedding as input to a representation learning model. A payment risk indicator is generated for the requested electronic payment by providing the account representation as input to a payment risk indicator model.

## Description

### Technical Field

The present disclosure relates to controlling and training analytics systems. More particularly, but not exclusively, the present disclosure relates to controlling automated payment analytics systems and to training subsystems of automated payment analytics systems.

### Background Art

Fraud detection models that inform automated payment switches, networks, and systems are widespread and have been implemented in the field of credit card processing for over three decades. These models process real-time transactions between an account and a merchant. The account is a credit card account.

Traditional model designs use hand-engineered features from multiple entity scopes. In other words, traditional models use aggregative features designed by data scientists using intuition, exploratory data analysis, domain knowledge and experimental iteration. Typically, ensemble decision tree algorithms are used as a classifier based on these features. An example of such an ensemble decision tree algorithm is a gradient boosted tree.

Sequential deep learning models can be used to perform the feature engineering task. Examples of sequential deep learning models include, but are not limited to, recurrent neural networks (RNNs) and transformers. Sequential deep learning models have been adopted in fraud prediction for credit cards.

"Towards a Foundation Purchasing Model: Pretrained Generative Autoregression on Transaction Sequences" by Skalski et al (hereinafter "Skalski et al"), introduces an approach for training RNNs for credit card accounts using self-supervision. Specifically, Skalski et al introduces a combination of next event prediction and past event reconstruction. Next event prediction may also be referred to as "generative autoregression".

In addition to credit card payments, electronic payments may be made between bank accounts. In particular, real-time account-to-account payment networks, such as the United Kingdom's 'Faster Payments' network, are emerging.

### Summary

According to first embodiments, there is provided a method of controlling an automated payment analytics system, the method comprising:
obtaining payment request data, the payment request data representing a requested electronic payment from an originating account to a beneficiary account, the originating and beneficiary accounts both being maintained by financial institutions;
obtaining, using the payment request data, state for the beneficiary account, the state for the beneficiary account being based on historical payments involving the beneficiary account;
generating a beneficiary account embedding by providing the payment request data and the state for the beneficiary account as input to an embedding model;
generating an account representation by providing the beneficiary account embedding as input to a representation learning model; and
generating a payment risk indicator for the requested electronic payment by providing the account representation as input to a payment risk indicator model.

In some examples, the embedding model has a sequential deep neural network architecture.

In some examples, the embedding model comprises a recurrent neural network, RNN.

In some examples, the state for the beneficiary account comprises RNN hidden state.

In some examples, the embedding model comprises a transformer.

In some examples, the state for the beneficiary account represents a set of historical payments involving the beneficiary account.

In some examples, the representation learning model comprises a feed-forward neural network, FNN.

In some examples, the FNN comprises a multi-layer perceptron, MLP.

In some examples, the payment risk indicator model comprises a multi-head classifier.

In some examples, different heads of the multi-head classifier are associated with different financial institutions, and the method comprises:
identifying a financial institution that maintains the originating account; and
selecting a head of the multi-head classifier to generate the payment risk indicator for the requested electronic payment, wherein the selected head is associated with the identified financial institution,
wherein the payment risk indicator is generated using the selected head of the multi-head classifier.

In some examples, the payment risk indicator model comprises a plurality of MLPs.

In some examples, the state for the beneficiary account is based on historical inbound payments made to the beneficiary account.

In some examples, the state for the beneficiary account is based on historical outbound payments made from the beneficiary account.

In some examples, the method comprises:
obtaining, using the payment request data, state for the originating account, the state for the originating account being based on historical payments involving the originating account; and
generating an originating account embedding by providing the payment request data and the state for the originating account as input to the embedding model,
wherein the account representation is generated by providing the beneficiary account embedding and the originating account embedding as input to the representation learning model.

In some examples, the state for the originating account is based on historical inbound payments made to the originating account.

In some examples, the state for the originating account is based on historical outbound payments made from the originating account.

In some examples, the requested electronic payment is a real-time electronic payment.

In some examples, the automated payment analytics system is operated by a payments rail.

In some examples, the automated payment analytics system is in a payment network operating across multiple financial institutions.

According to second embodiments, there is provided a method of controlling an automated payment analytics system, the method comprising:
obtaining payment request data, the payment request data representing a requested electronic payment from an originating account to a beneficiary account, the originating account and the beneficiary account both being managed by financial institutions;
identifying a financial institution that manages the originating account;
   selecting a head of a multi-head classifier to generate a payment risk indicator for the requested electronic payment, wherein different heads of the multi-head classifier are associated with different financial institutions, and wherein the selected head is associated with the identified financial institution; and
generating, using the selected head of the multi-head classifier, the payment risk indicator for the requested electronic payment.

According to third embodiments, there is provided a system, such as an automated payment analytics system, configured to perform a method provided according to the first and/or second embodiments.

According to fourth embodiments, there is provided a method of training a subsystem of an automated payment analytics system, the subsystem comprising an embedding model, the method comprising:
obtaining state for a beneficiary account, the state for the beneficiary account being based on electronic payments involving the beneficiary account;
generating a set of forward embeddings by providing the state for the beneficiary account as input to a forward recurrent model; and
using the set of forward embeddings to train the embedding model.

In some examples, using the set of forward embeddings to train the embedding model comprises:
predicting, using the set of forward embeddings, future payments involving the beneficiary account.

In some examples, the method comprises:
generating a set of backward embeddings by providing the state for the beneficiary account as input to a backward recurrent model,
wherein using the set of forward embeddings to train the embedding model comprises:
   using the set of forward embeddings and the set of backward embeddings to force the embedding model to generate embeddings that are:
   similar for payments that involves the same financial institution account as each other; and
   dissimilar for payments that involve different financial institution accounts from each other.

According to fifth embodiments, there is provided a method of training a subsystem of an automated payment analytics system, the subsystem comprising a representation learning model and a payment risk indicator model, the method comprising:
generating an account representation by providing a beneficiary account embedding as input to the representation learning model, the beneficiary account embedding being an embedding representing a set of electronic payments involving a beneficiary account, the beneficiary account being managed by a financial institution;
generating a predicted payment risk indicator by providing the account representation as input to the payment risk indicator model;
calculating a loss based on a difference between the predicted payment risk indicator and a ground truth payment risk indicator; and
performing gradient-backpropagation on the calculated loss.

In some examples, the account representation is generated by providing the beneficiary account embedding and an originating account embedding as input to the representation learning model, the originating account embedding being an embedding representing a set of electronic payments involving an originating account, the originating account being managed by the or another financial institution.

According to sixth embodiments, there is provided a system configured to perform a method provided according to the fourth and/or fifth embodiments.

According to seventh embodiments, there is provided an automated payment analytics system comprising:
a classifier head switch; and
a multi-headed classifier,
wherein the classifier head switch is configured to:
   receive data indicative of an originating account of a requested payment; and
   select, based on the originating account of the requested payment, a head of the multi-headed classifierto generate a payment risk indicator for the requested payment.

According to eighth embodiments, there is provided an automated payment analytics system configured to generate a payment risk indicator, for a requested payment from an originating account to a beneficiary account, based on the requested payment and:
historic incoming payments made to the originating account;
historic outgoing payments made from the originating account;
historic incoming payments made to the beneficiary account; and/or
historic outgoing payments made from the beneficiary account.

### Brief Description of the Drawings

Certain embodiments of the present disclosure will now be described with reference to the accompanying drawings, in which:
Figure 1 is a schematic diagram showing an example of a real-time decisioning system.
Figure 2 is a schematic diagram showing an example of a payment request processing pipeline.
Figure 3 is a schematic diagram showing an example of a training pipeline for training an embedding model.
Figure 4 is a schematic diagram showing an example of embedding space regularisation.
Figure 5 is a schematic diagram showing an example of a training pipeline for joint training of a representation learning model and a payment risk indicator model.
Figures 6A and 6B collectively are a diagram showing another example of a payment request processing pipeline.
Figure 7 is a graph showing an example of detection performance in a real-time payment network.

### Detailed Description

The term "payment" is used herein to mean the subset of "transactions" that involve account-to-account money transfers. However, where the term "transaction" is used in examples below, it will be understood to refer to the payment-type subset of transactions, unless the context indicates otherwise.

Examples described herein concern behaviour associated with specific bank accounts. A bank account may have one or more other "entities" associated with it. Examples of such entities include, but are not limited to, debit cards, credit cards, and other bank accounts belonging to the same consumer.

Real-time payments between bank accounts are impacted by illegal activity, including fraud, scams and money laundering. Recent years have seen a significant increase the number and cost of scams. These have significant impact on consumers. In response, governments and regulators have put the responsibility to detect and prevent these scams onto financial institutions (Fls). For example, the United Kingdom's Payments Services Regulator has issued a reimbursement mandate onto participants in the real-time 'Faster Payments' network. As a result, banks are mandated to refund victims of scams. From October 2024, the mandate will be extended to share liability equally between the originating and beneficiary FI.

Thus, automated decisioning systems operating within payment processing infrastructure that approve or decline transactions are of particular interest to Fls. Such automated decisioning systems may approve or decline transactions based on anomaly level, risk propensity, or otherwise. In some cases, automated decisioning systems may subsequently refer transactions for analyst review. Commonly, Fls rely on bespoke machine learning (ML) decisioning systems designed to evaluate outgoing transactions or payments for risk. These systems disregard evaluations of inbound money flows. They also have little to no information on the transaction beneficiary to include in their decisioning logic.

Models provisioned directly to banks by their technology partners are limited in their effectiveness. This is because they operate over a restricted view of all transactions recorded in a network. The full view of transactions recorded in such a network is only accessible to an intermediary. An example of such an intermediary is a payments processor. Many of the risk indicators for certain types of transaction relate to the beneficiary account. This is because the beneficiary account is the account that criminally receives funds. Originating bank models cannot encode behavioural representations on the beneficiary side of transactions. Originating bank models are, therefore, unable to identify characteristics of a money mule, for example.

Meanwhile, Fls exhibit heterogeneous labelling practices when their analysts review and report potential criminal cases. This may reflect differing definitions between Fls. Alternatively, it may simply indicate that some Fls only wish to use the consortium system to identify a specific subset of criminal activity. For example, some Fls only tag scams. Others tag scams and some combination of first-party fraud and third-party (account takeover) fraud. Some others add labels for the money mule activity that occurs downstream of an inbound fraudulent transaction. This is a type of money laundering rather than fraud. These criminal typologies have similarities but are different in their prevalence and presentation.

Thus, comprehensive network-level models that can jointly assess outbound and inbound payment flows across all, or at least many, Fls in a payments network would be particularly effective for Fls and payment rails. However, such models would involve new designs and pipelines for data collection, aggregation and processing.

Examples described herein build on generative modelling architectures, such as those described in Skalski et al. Such examples design a data processing architecture for fraud decisioning systems at the centre of networked Fls. Such examples provide a transaction profiling mechanism for financial entities that can consider both their inbound and outbound payment flows. Both inbound and outbound flows are observable in a networked consortium. This produces better embedded characterisations of transaction histories by providing a complete view of money movement patterns that are indicative of various criminal typologies. This, in turn, translates into better quality features that can be used in fraud-scoring models. Some specific examples described herein combine, reason about, and use joint pairs of originating and beneficiary embeddings in a decisioning system to fight financial crime risk.

In more detail, examples described herein pertain generally to financial crime detection in real-time account-to-account payment networks operating across multiple Fls. Such examples use ML to provide financial crime detection in real-time. Examples described herein improve the performance of automated payment approval switches. Such switches may operate at a centralised payments facilitating organisation known as a "payments rail" or may operate at the banks participating in the payment network. These switches may implement decisioning logic that applies a threshold to a fraud propensity score. Examples described herein improve such decisioning systems by producing a score that more accurately identifies criminal transactions, while mis-identifying fewer transactions that are legal.

Examples of criminal transactions in this context include, but are not limited to, account takeover fraud, first-party fraud, authorised push payment fraud and money laundering. Authorised push payment fraud is also known as "scams".

Examples described here use data pooled across the participants of the financial network. This enables complementary signals of inbound and outbound risk to be exploited. Such signals are currently ignored in bespoke existing systems serviced to Fls for fraud detection and risk evaluation. Such pooled data enables maximum, or at least increased, learning from drawing together a large quantity of data from multiple sources, while preventing the heterogeneity in financial crime labelling practices between Fls from impacting the performance observed by each institution on their specific labelling definitions, or at least reducing such impact.

Examples described herein make a network-level contribution towards ML pipelines for transaction data processing in a new era of shared financial liabilities, across originators and beneficiaries of financial transactions. Examples described herein can be used to identify payment anomalies and control a payment processing switch that automates the approval of non-anomalous payment requests.

Examples described herein use models that leverage data gathered at scale from multiple Fls to identify criminal activity specific to the tagging strategy of each bank.

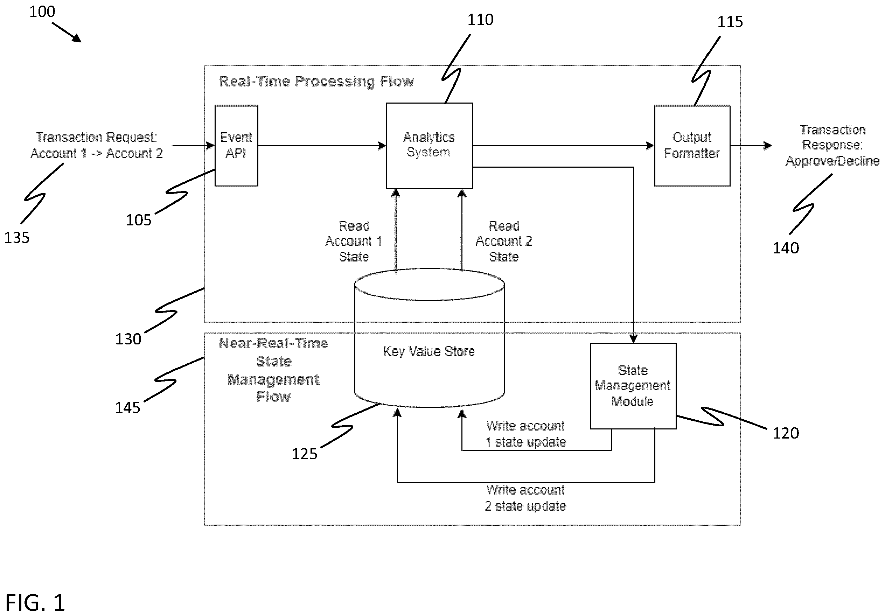

Referring to Figure 1, there is shown an example of a decisioning system 100.

In this example, the decisioning system 100 comprises an automated payment decisioning switch. In other words, the decisioning system 100 is configured to make automated decisions about payments. More specifically, in this example, the decisioning system 100 is or comprises a real-time automated payment decisioning switch and so is configured to make automated decisions about real-time payments. A typical real-time latency for payments, end-to-end, is around one second. Fraud systems are generally expected to operate in the low tens of milliseconds. Examples described herein may operate within such an example decisioning system 100.

The example decisioning system 100 comprises an event application programming interface (eventAPI) 105. The example decisioning system 100 comprises an analytics system 110. The analytics system 110 may also be referred to as an "analytics module", an "automated payment analytics system", or the like. The example decisioning system 100 comprises an output formatter 115. The example decisioning system 100 comprises a state management module 120. The example decisioning system 100 comprises a key value store 125.

An example of controlling the example decisioning system 100 will now be described.

In a real-time processing flow, depicted in Figure 1 by item 130, a transaction approval request 135 is incident onto the eventAPI 105. In this example, the transaction approval request 135 is in encrypted form.

The transaction approval request 135 requests approval of a transaction from a first account to a second account. In accordance with examples described herein, the transaction approval request 135 is a payment request representing a requested electronic payment from an originating account to a beneficiary account. Such a payment request may also be referred to as "payment request data"; in other words, data that comprises a payment request. The originating account may also be referred to as an "originator" account. The originating and beneficiary accounts are both maintained by Fls. The requested electronic payment may be a real-time electronic payment.

The decisioning system 100 decrypts the encrypted transaction approval request 135. The decisioning system 100 then directs the decrypted transaction approval request 135 to the analytics system 110.

In some examples, all neural networks described herein operate within the analytics system 110. The analytics system 110 may be operated by a payments rail. The analytics system 110 may be in a payment network operating across multiple Fls.

The analytics system 110 identifies the account entities to which the transaction request relates. In this example, the account entities are the first and second accounts. In specific examples described herein, the account entities are originating and beneficiary accounts.

The analytics system 110 then reads state for the identified account entities from the key value store 125. The key value store 125 may be referred to as a "key-value store", a "key-value store database" or the like. In this example, the key value store 125 is keyed by account entity identifier (ID).

In some examples, the state in the key value store 125 comprises a list of past transactions. In some examples, state in the key value store 125 comprises RNN hidden state.

In more detail, such state may be a list of previous transactions. The list may be provided as input into an RNN or transformer model. Alternatively, the state may be RNN hidden state. The RNN hidden state may be computed up to the previous transaction on the account. For RNN hidden state, a list of historic transactions is not provided as input when a transaction is stored. Instead, only the most recent transaction is provided. This is because the hidden state from the previous transactions has already been computed.

References herein to state for an originating and/or beneficiary account, where the state is based on payments involving the originating and/or beneficiary accounts, should therefore be understood to encompass both a set (for example, a list) of payments involving the originating and/or beneficiary account and also RNN hidden state. In both cases, the state is based on payments involving the originating and/or beneficiary accounts. State comprising, or otherwise representing, a set of historical payments is generally referred to herein as "historical account payment data", and includes historical originating account payment data and historical beneficiary account payment data. Therefore, although examples described below primarily relate to state in the form of a list of payments, such examples are equally applicable to state in the form of RNN hidden state.

The analytics system 110 therefore obtains historical beneficiary account payment data using payment request data, such as the transaction approval request 135. The historical beneficiary account payment data represents a set of observed historical payments involving the beneficiary account. The analytics system may also obtain historical originating account payment data using payment request data, such as the transaction approval request 135. The historical originating account payment data represents a set of observed historical payments involving the originating account.

In some scenarios an account that is involved in a payment is operated by an FI that is outside of the payments consortium. In such scenarios, the complete payment history for that account may not be available. In particular, only transactions that involved an 'in consortium' account as the counterparty would be observed.

In some examples, the analytics system 110 determines the outcome of the transaction request 135. In other examples, the analytics system 110 determines a risk indicator for the transaction. The risk indicator may be a risk score, a legitimacy score, or any other indicator of a measure of risk of the transaction. To determine the outcome or risk indicator, the analytics system 110 uses neural network modules as described herein. The analytics system 110 may additionally use score thresholding logic to determine the outcome.

The analytics system 110 may emit a risk indicator or a final decision on the determined outcome to the output formatter 115. The output formatter 115 creates a response 140 to a requestor from which the transaction request 135 was received. The output formatter 115 may encrypt the response 140. The output formatter 115 transmits the (encrypted) response 140 to the requestor.

The payment risk score may also be used to control decisioning points related to investigations of accounts for suspected fraud. For example, the payment risk score may be used to control which accounts are referred to financial investigators, a triage or prioritisation process that decides how quickly a case is investigated, and/or whether to temporarily delay payment settlements on the account while investigations are underway.

In a near-real-time state management flow, depicted in Figure 1 by item 145, the analytics system 110 computes any state updates to be made as a result of having processed the transaction request 135. The analytics system 110 sends any such state updates to the state management module 120.

The state management module 120 operates in near real-time. The state management module 120 manages a queue of state updates. The state management module 120 uses a distributed writing process with in-built load balancing. This enables state to be updated in near-real-time, namely within several seconds of transaction processing.

In this specific example, various components are shown as being co-located, for example centralised. However, such components may be more distributed in other examples.

For example, the analytics system 110 may be centralised. Each FI may implement its own payment decisioning switch as a separate downstream system. Such payment decisioning switches may take a risk indicator output by the analytics system 110 as an input, potentially with additional input. Thus, controlling the analytics system 110 may not necessarily also involve direct control of the payment decisioning switch. Thus, the analytics system 110 may feed into multiple independent payment switches, for example operated by a payments rail and/or a plurality of Fls.

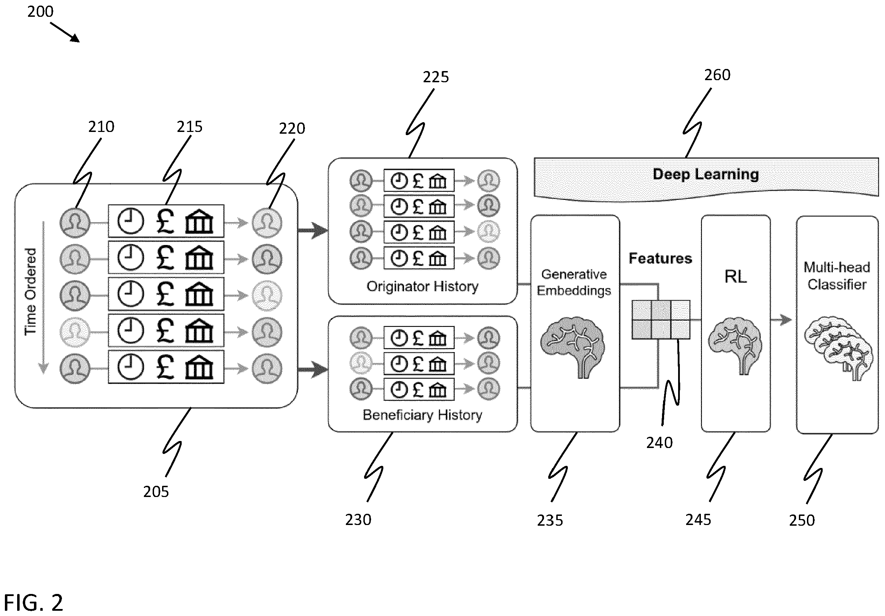

Referring to Figure 2, there is shown an example of a payment request processing pipeline 200. As will be explained in more detail below, the payment request processing pipeline 200 may be used for generative embeddings and for decisioning. The payment request processing pipeline 200 may be implemented in the analytics system 110 described above with reference to Figure 1.

An objective of the payment request processing pipeline 200 is to map transaction patterns of accounts into numerical representations that correlate with account behaviours. Account behaviours may also be referred to as "roles". Example types of account behaviour include, but are not limited to, fraudulent and anomalous behaviour types. An example of a fraudulent and anomalous behaviour type is that of a beneficiary account money mule.

In this example and other examples described herein, behaviour of both the originating account and the beneficiary account are used to generate a payment risk indicator.

However, in other examples, only one of the originating account and the beneficiary account is used to generate the payment risk indicator. For example, behaviour of a beneficiary account belonging to money mule may be sufficient to determine a high level of risk in a requested payment to that beneficiary account, regardless of behaviour of an originating account. However, using both the originating account and the beneficiary account can provide more accurate risk assessment in some scenarios. It should, therefore, be understood that examples described herein concerning both originating and beneficiary account behaviour are equally applicable to originating or beneficiary account behaviour.

In this example, the payment request processing pipeline 200 starts with state in the form of a sequence of payments 205.

In this example, an electronic payment has been requested from an originating account to a beneficiary account. In this example, the sequence of payments 205 is time-ordered. In this example, the most recent payment in the sequence of payments 205 is the requested payment and appears at the bottom of the sequence of payments 205. Older payments appear higher in the sequence of payments 205.

In this example, each payment in the sequence of payments 205 has an associated timestamp 210. In this example, each payment in the sequence of payments 205 has an associated monetary amount 215. In this example, each payment in the sequence of payments 205 has one or more associated Fls 220.

In this specific example, five payments are shown in the sequence of payments 205. The first (from top to bottom) payment in the sequence of payments 205 is from the originating account for the requested transaction to another beneficiary. The second payment in the sequence of payments 205 is from the beneficiary account for the requested transaction to the originating account for the requested transaction. The third payment in the sequence of payments 205 is from the originating account for the requested transaction to another beneficiary. The fourth payment in the sequence of payments 205 is from the beneficiary account of the third payment to the beneficiary account for the requested transaction. As explained above, the fifth payment in the sequence of payments 205 is from the originating account for the requested transaction to the beneficiary account for the requested transaction.

In this example, the sequence of payments 205 is split into an originator history payment sub-sequence 225 and a beneficiary history payment sub-sequence 230. A payment in the sequence of payments 205 may, however, appear in both the originator and beneficiary history payment sub-sequences 225, 230.

The originator history payment sub-sequence 225 includes any payments in the sequence of payments 205 that involve the originator account. Such payments may be incoming or outgoing with respect to the originator account. In this specific example, the originator history payment sub-sequence 225 includes the first, second, third and fifth payments from the sequence of payments 205. In this specific example, the originator history payment sub-sequence 225 does not include the fourth payment from the sequence of payments 205 since this did not involve the originator account.

In this specific example, the originator history payment sub-sequence 225 includes the current payment request. However, in other examples, the originator history payment sub-sequence 225 may include strictly historic payments and the current payment request may be otherwise combined with the originator history payment sub-sequence 225.

Thus, in this example, historical originating account payment data, such as the originator history payment sub-sequence 225, is obtained using payment request data representing a requested payment. The historical originating account payment data represents a set of historical payments involving the originating account.

Historical originator account payment data, such as the originator history payment sub-sequence 225, may therefore represent a set of historical payments involving the originator account. In other words, historical originator account payment data may represent a set of historical inbound payments made to the originator account and/or a set of historical outbound payments made from the originator account.

The beneficiary history payment sub-sequence 230 includes any payments in the sequence of payments 205 that involve the beneficiary account. Such payments may be incoming or outgoing with respect to the beneficiary account. In this specific example, the beneficiary history payment sub-sequence 230 includes the second, fourth and fifth payments from the sequence of payments 205. In this specific example, the beneficiary history payment sub-sequence 230 does not include the first and third payments from the sequence of payments 205 since they did not involve the beneficiary account.

In this specific example, the beneficiary history payment sub-sequence 230 includes the current payment request. However, in other examples, the beneficiary history payment sub-sequence 230 may include strictly historic payments and the current payment request may be otherwise combined with the beneficiary history payment sub-sequence 230.

Historical beneficiary account payment data, such as the beneficiary history payment sub-sequence 230, may therefore represent a set of historical payments involving the beneficiary account. In other words, historical beneficiary account payment data may represent a set of historical inbound payments made to the beneficiary account and/or a set of historical outbound payments made from the beneficiary account.

The originator and beneficiary history payment sub-sequences 225, 230 are provided as input to an embedding model 235. The embedding model 235 may also be referred to as an "embeddings model", an "embedding module", a "shared generative layer" or the like.

The embedding model 235 may have a sequential deep neural network architecture. The embedding model may comprise an RNN and/or a transformer.

In this example, the embedding model 235 is a generative embedding model. In this example, the generative embedding model 235 relies on a bespoke generative modelling architecture.

The generative embedding model 235 outputs a set of features 240. Such features may also be referred to herein as "feature representations".

Thus, histories for originating and beneficiary accounts (and, therefore, for the originating and beneficiary entities associated with those accounts) in a transaction may be processed through the generative embedding model 235. Both incoming and outgoing transactions can be accounted for in this manner for both the originating and beneficiary accounts. Therefore, the generative embedding model 235 may process both inbound and outbound transactions. The generative embedding model 235 yields comprehensive, yet compressed, feature representations 240. In this example, the feature representations 240 are representative of transacting patterns for the originating and beneficiary entities.

Further, for any given financial transaction, the generative embedding model 235, which serves as a shared generative layer, may be leveraged to process sequences 225, 230 of outbound and inbound transactions for the originating and beneficiary accounts. Such sequences 225, 230 may be pooled from all participating Fls in a consortium or payments network. This allows for a financial network to derive high quality, comprehensive and compressed embedded representations 240 of historic transacting patterns for the originating and beneficiary accounts.

The generative embedding model 235 may therefore be used to provide generative feature engineering. The generative embedding model 235 may be implemented as a high-capacity generative model, pre-trained on billions of transaction sequences across diverse payment networks and/or banking institutions in various jurisdictions across the world. In some examples, the generative embedding model 235 is further fine-tuned on transaction data and outcome labels relevant to the consortia or network seeking a decisioning system using a process of supervised machine learning. In examples, the generative embedding model 235 compiles profile embeddings 240 across inbound and outbound transacting histories in originator and beneficiary entities. Such profile embeddings 240 may be extracted using a sequential deep neural architecture. The sequential deep neural architecture may use an RNN, a transformer, or a combination thereof.

Thus, a beneficiary account embedding 240 may be generated by providing payment request data (for example, data representing the fifth payment in the beneficiary history payment sub-sequence 230) and historical beneficiary account payment data (for example, data representing the second and fourth payments in the beneficiary history payment sub-sequence 230) as input to the embedding model 235.

In this example, an originating account embedding 240 is generated by providing payment request data (for example, data representing the fifth payment in the originator history payment sub-sequence 225) and historical originating account payment data (for example, data representing the first, second and third payments in the originating history payment sub-sequence 225) as input to the embedding model 235.

The set of features 240 output by the generative embedding model 235 is provided as input to a representation learning model 245. The representation learning model 245 may also be referred to as a "representation learning module", a "representation layer" or the like. The representation learning model 245 can identify compatibilities and anomalies across patterns in the originating and beneficiary entity profiles. The term "profile" is used herein in this context synonymously with the term "feature" and "embedding", as an output from the generative embedding model 235. In this example, the representation learning model 245 is stateless. In this example, representation learning model 245 outputs a single or combined embedding for a payment.

The representation learning model 245 may comprise a feed-forward neural network (FNN). The FNN may comprise a multi-layer perceptron (MLP).

In some examples, additional information, features and/or data are added as additional input to the representation learning model 245, in addition to the set of features 240. For example, such additional input may comprise manually engineered features. Such manually engineered features may or may not be based on non-transactional data. By way of a specific example, engineered features based on fraud reports sent by participating Fls may be incorporated. From this, a fraud rate may be engineered for each of the originating and beneficiary banks, or the specific sort codes or bank branches involved. A flag indicating whether fraud has previously been reported for one of the accounts may also be engineered. Third party decorations may also be used as additional input. For example, third party decorations may be made either consistently across events from all Fls or from subsets of the Fls. In the latter case, the additional information might, instead, be used as additional input to a multi-headed classifier. This is because such information may only available for subsets of the Fls.

Thus, the representation learning model 245, which acts as a representation layer, is responsible for encoding compatibilities, discrepancies and/or further signals and processing both the originating and beneficiary entity profiles together.

In this specific example, the representation learning model 245 extracts predictively useful representations for the accounts in either the originating or beneficiary context, from a single or combined embedding.

The representation learning model 245 therefore provides representation learning. The representation learning model 245 may be implemented as a high-capacity representation learning model that learns to combine originating and beneficiary embeddings in a transaction. This architecture may be implemented as an FNN. An example of such an FNN is an MLP.

An account representation can therefore be generated by providing a beneficiary account embedding 240 as input to the representation learning model 245. In this example, the account representation is generated by providing both the beneficiary account embedding 240 and the originating account embedding 240 as input to the representation learning model 245.

An output of the representation learning model 245 is provided as input to a payment risk indicator model 250. In this example, the payment risk indicator model 250 comprises a classifier. In this specific example, the payment risk indicator model 250 comprises a multi-head classifier. The payment risk indicator model 250 may comprise a plurality of MLPs. In this example, the payment risk indicator model 250 is stateless.

In some examples, the payment risk indicator model 250 comprises a payment decisioning model. However, in other examples, payment decisioning is performed outside of the analytics system 110. A payment decisioning model generates a payment decision for a requested payment. Such a decision may be "approve", "decline" or otherwise. A payment decisioning model may also be referred to as a "decisioning system", "decisioning logic" or the like.

The multi-head classifier 250 may be implemented as a family of low-capacity MLP classifiers, used for scoring and decisioning. The multi-head classifier 250 may be used to adapt risk indicators to the labelling schemes of each bank in a consortium. This can be particularly effective since different banks have different definitions of labels. For example, some will only label scams, while others will label scams, account takeover fraud, first-party fraud, and mules. This personalises predictions to the financial crime types that the bank has decided to target.

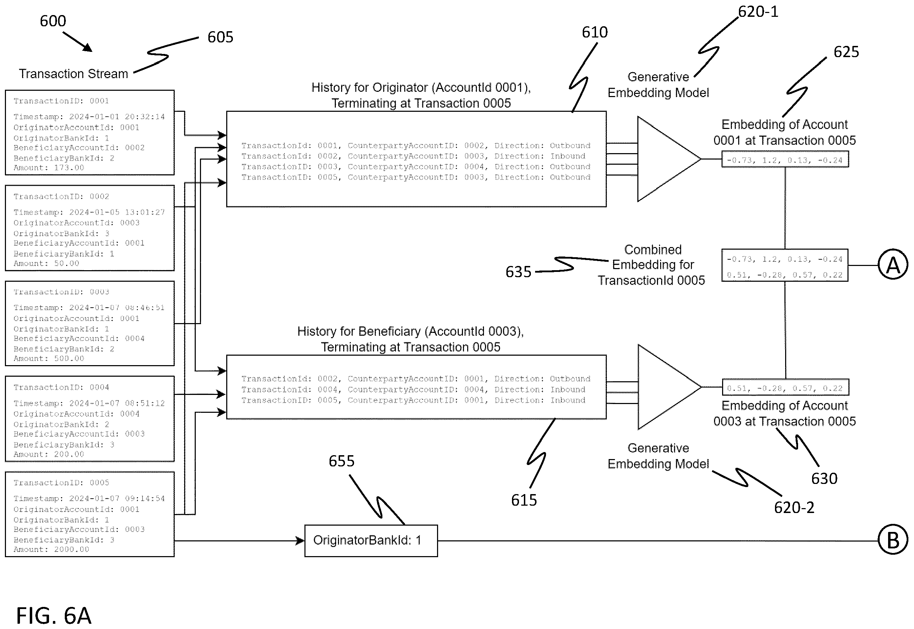

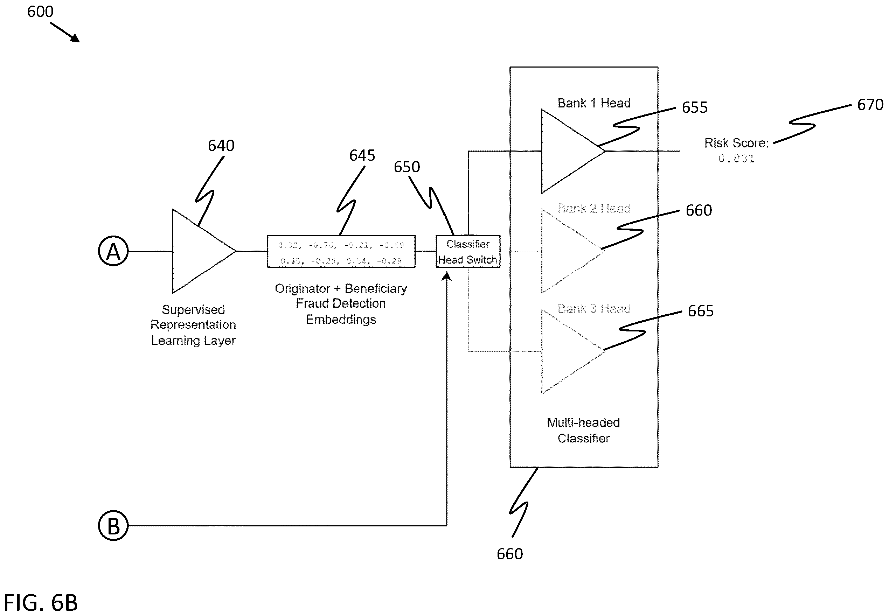

Different heads of the multi-head classifier 250 may be associated with different Fls. As will be explained in more detail below with reference to Figures 6A and 6B, an FI that maintains an originating account may be identified. A particular head of the multi-head classifier 250 may be selected to generate a payment risk indicator for a requested electronic payment. The selected head may be associated with the identified Fl. The payment risk indicator may be generated using the selected head of the multi-head classifier. A head associated with the FI that manages the originating account may therefore be used to assess the risk of making the requested payment.

The payment risk indicator model 250, which acts as a risk-indicating system, may therefore yield scores or other indicators representative of risk signals and financial crime prevalence. The representation learning model 245 therefore, ultimately, allows the multi-head classifier 250 to produce a score and/or other indicator that is indicative of fraud risk.

A payment risk indicator may therefore be generated for a requested electronic payment by providing an account representation as input to the payment risk indicator model 250.

As explained above, an output of the representation learning model 245 is provided as input to the payment risk indicator model 250. However, in some examples, additional input is provided to the payment risk indicator model 250. For a multi-head classifier, the additional input may be specific to each FI (for example, bank) with which the multi-head classifier is associated. For example, a first FI may provide an additional input in the form of a risk score associated with a user device that is being used to access an internet banking webpage or banking application. A second FI may be unable to provide any additional inputs. A third FI may be able to provide a different type of additional input. An example of such an additional input is an additional risk score for the transactor based on activity in other channels. Examples of such other channels include, but are not limited to, debit cards and credit cards.

A rules system may apply decisioning logic upon the risk indicator. For example, the rules system may trigger a decline and alert if a risk score exceeds a predetermined operational threshold.

Thus, the payment request processing pipeline 200 may be configured to control the analytics system 110 directly. The analytics system 110 may co-located with the decisioning switch or may be separate from the decisioning switch. As explained above, the decisioning system 100 may be or may comprise a payment approval switch. As also explained above, the decisioning system 100 may be centralised or distributed. Indeed, an example of this arrangement, alongside the network and data management components, has been described above with reference to Figure 1.

In this example, the generative embeddings model 235, features 240, representation learning model 245 and multi-head classifier 250 are part of a deep learning architecture 260.

Examples described herein may use different and independent procedures to train and calibrate the ML components of the decisioning system 100, as will now be described.

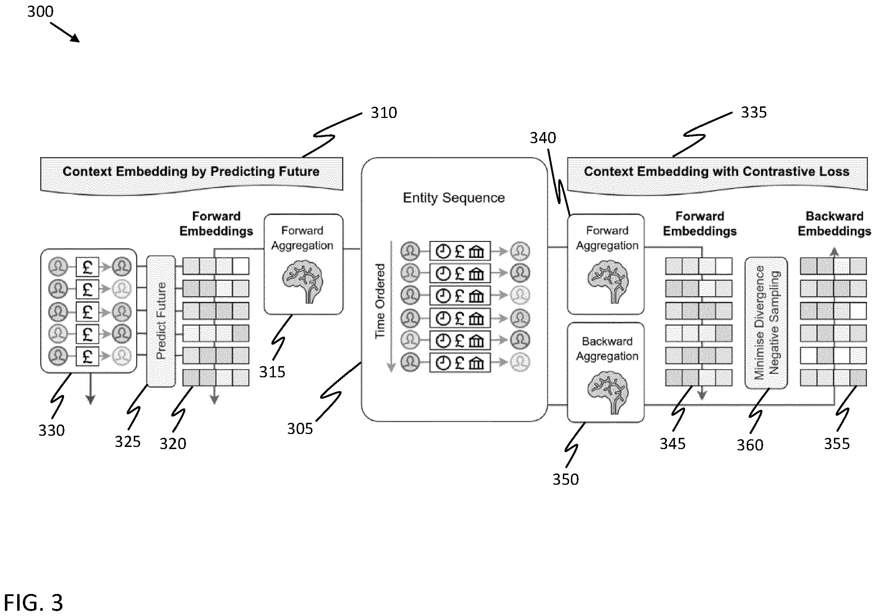

Referring to Figure 3, there is shown an example of a training pipeline 300. The training pipeline 300 may be used to train the generative embedding model 235. The generative embedding model 235 may be trained independently of the representation learning model 245 and the payment risk indicator model 250.

The training pipeline 300 provides a mechanism for compressing transacting histories for a given entity, including both incoming and outgoing transactions. In this example, training and the training pipeline 300 relies on two self-supervised procedures coupled together as will now be explained. However, in other examples, a single generative procedure may be used. In this specific example, the two self-supervised procedures that are coupled together involve a generative process (future prediction) and a contrastive learning process. An example of future prediction is next-event prediction, in which the next event is predicted.

In this example, the training pipeline 300 uses an entity sequence 305. In this example, the entity sequence 305 is a time-ordered sequence of payments involving a given entity.

In this specific example, the entity sequence 305 comprises six payments involving the given entity. The first (from top to bottom) payment in the entity sequence 305 is from the given entity to another entity. The second payment in the entity sequence 305 is from another entity to the given entity. The third payment in the entity sequence 305 is from the given entity to another entity. The fourth payment in the entity sequence 305 is from the given entity to another entity. The fifth payment in the entity sequence 305 is from another entity to the given entity. The sixth payment in the entity sequence 305 is from the given entity to another entity.

A context embedding may be generated with future payments, as indicated by item 310 in Figure 3. With future prediction, the generative embedding model 235 is trained to produce embedded representations 240 that retain predictive power to infer future payment behaviour for each entity. This may be achieved by gradient-backpropagation on a loss that estimates future data from aggregations of past data.

For future payment prediction, the entity sequence 305 is provided as input to a forward aggregation model 315.

The forward aggregation model 315 outputs a sequence of forward embeddings 320.

The sequence of forward embeddings 320 is input to a decoder model 325, which converts the sequence of forward embeddings 320 into a corresponding sequence of predicted future payments 330. The decoder model 325 is tasked with predicting future payments. Thus, in this example, the generative embedding model 235 is an encoder, and the decoder model 325 makes predictions based on the output of the generative embedding model 235 as the encoder.

In this example, the sequence of predicted future payments 330 comprises six predicted future payments. In this example, all of the predicted future payments involve the given entity as originator or beneficiary. In addition, in this example, all of the predicted future payments involve the other entities from the entity sequence 305 as beneficiary or originator (whichever the given entity is not).

Thus, transaction histories in the form of the entity sequence 305 may be sequentially processed through a recurrent architecture in the form of the forward aggregation model 315. The (forward) embeddings 320 produced by the recurrent architecture are predictive of future transactions. Such future transactions are yet-unobserved transactions.

A context embedding may be generated with contrastive loss, as indicated by item 335 in Figure 3. With contrastive learning, a backwards recurrent architecture further processes sequences in reverse order, starting from the future and heading to the present. The generative embedding model 235 is trained to produce embeddings from past-and-future transaction histories to be as similar as possible for the same entity, while being as dissimilar as possible for different entities. This may similarly be achieved through gradient-backpropagation on a loss that measures the difference in embeddings.

For contrastive loss, the entity sequence 305 is provided as input to a forward aggregation model 340. In this example, the forward aggregation model 340 used for contrastive loss is the same as the forward aggregation model 315 used for future predicting. Different reference signs are, however, used for ease of understanding.

The forward aggregation model 340 outputs a sequence of forward embeddings 345. In this example, the sequence of forward embeddings 345 used for contrastive loss is the same as the sequence of forward embeddings 320 used for future predicting. Different reference signs are, however, used for ease of understanding.

For contrastive loss, the entity sequence 305 is also provided as input to a backward aggregation model 350.

The backward aggregation model 350 outputs a sequence of backward embeddings 355.

A contrastive learning module 360 seeks to maximise the similarity between embeddings of all payments involving the given entity, while seeking to maximise the dissimilarity between embeddings of payments involving the given entity on the one hand and embeddings of payments involving another entity on the other hand.

Thus, a backwards recurrent architecture in the form of the backward aggregation model 350 processes sequences in reverse order, from the future to the present. In this example, such sequences include the entity sequence 305. A contrastive training regime forces the embeddings 345, 355 from past-and-future transaction histories to be as similar as possible for the same entity, while also being as dissimilar as possible for different entities.

Thus, a subsystem (comprising the embedding model 235) of an automated payment analytics system (for example, the analytics system 110) may be trained as follows. Beneficiary account payment data, such as the entity sequence 305, can be obtained. The beneficiary account payment data represents a set of electronic payments involving the beneficiary account. A set of forward embeddings 320, 345 can be obtained by providing the beneficiary account payment data as input to a forward recurrent model 315, 340. The set of forward embeddings 320, 345 can be used to train the embedding model 235.

Using the set of forward embeddings 320, 345 to train the embedding model 235 may comprise predicting, using the set of forward embeddings 320, 345, future payments 330 involving the beneficiary account.

In some examples, a set of backward embeddings 355 is generated by providing the beneficiary account payment data as input to a backward recurrent model 350. Using the set of forward embeddings 320, 345 to train the embedding model 235 may comprise using the set of forward embeddings 345 and the set of backward embeddings 355 to force the embedding model 235 to generate embeddings that are similar for payments that involve the same FI account as each other dissimilar for payments that involve different FI accounts from each other.

Originating account payment data may alternatively or additionally be used for training in a corresponding manner.

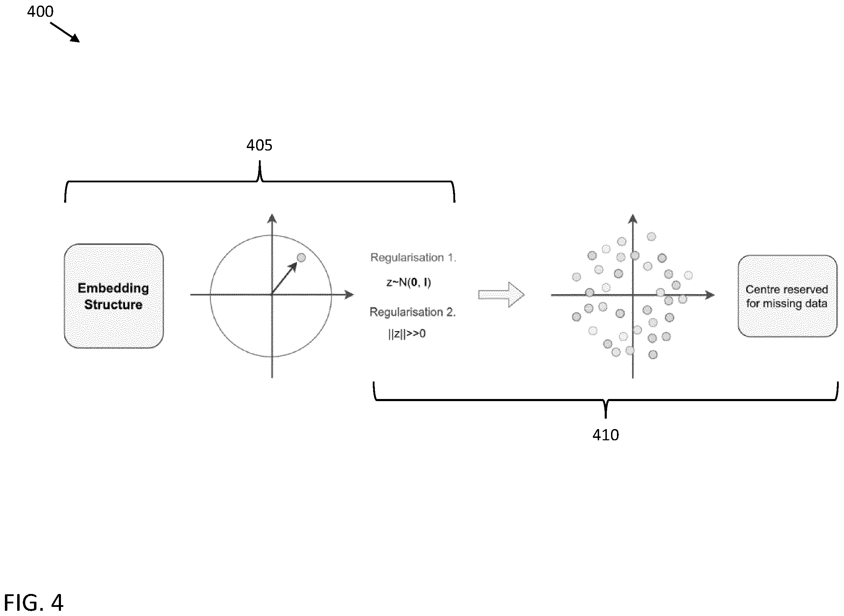

Referring to Figure 4, there is shown an example of embedding space regularisation 400.

The generative embedding model 235 may be trained using regularisation terms to impose structure in embedding space.

A first regularisation, depicted using item 405 in Figure 4, constrains embeddings to being within a unit circle, thereby providing an embedding structure. This constraint may be represented mathematically as *z*~*N*(0,1)*.*

A second regularisation, depicted using item 410 in Figure 4, constrains embeddings to being far away from the centre of the unit circle, thereby reserving the centre region of the unit circle for missing data. This constraint may be represented mathematically as ∥*z*∥ ≫ 0.

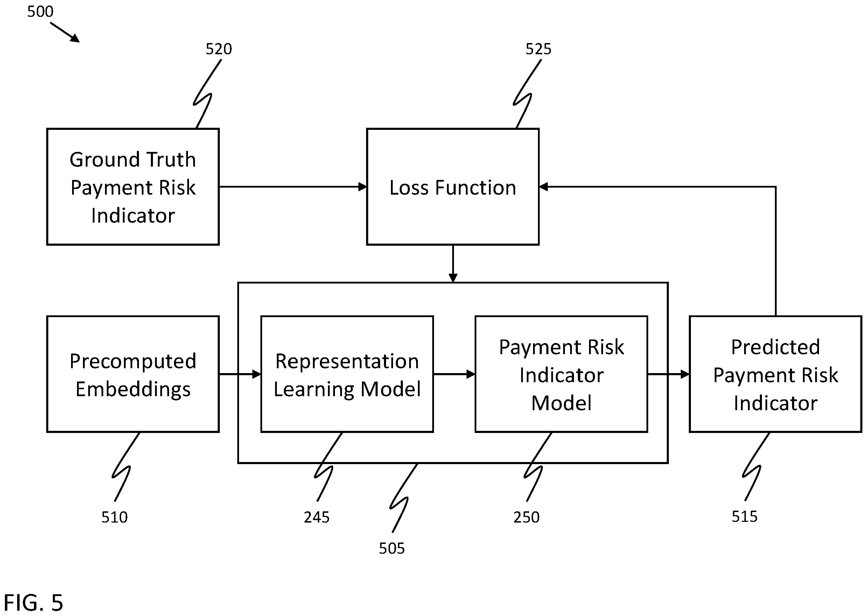

Referring to Figure 5, there is shown an example of a training pipeline 500. The training pipeline 500 may be used to train the representation learning model 245 and the payment risk indicator model 250. The representation learning model 245 and the payment risk indicator model 250 may be trained independently of the generative embedding model 235.

In this example, the representation learning model 245 and payment risk indicator model 250 are trained jointly and end-to-end, as indicted by item 505 in Figure 5. As explained above, the payment risk indicator model 250 may comprise a multi-head classifier. In this example, the representation learning model 245 and payment risk indicator model 250 are trained by gradient propagation.

In this example, precomputed embeddings 510 for originating and beneficiary accounts in each transaction are provided as input to the representation learning model 245. In this example, the precomputed embeddings 510 for originating and beneficiary accounts are concatenated together prior to being input to the representation learning model 245.

An output of the representation learning model 245 is provided as input to the payment risk indicator model 250. In this example, the payment risk indicator model 250 outputs a predicted payment risk indicator 515 in the form of a risk score 515 for each transaction. In this example, the predicted score 515 is measured against a ground truth payment risk indicator 502 in the form of a ground truth label 520. In some examples, the ground truth label 520 is categorical. The ground truth label 520 may be binary, such as "fraud" or "no fraud". The ground truth label may be referred to as a "real label". The ground truth label 520 may be provided by a bank or other type of FI.

In this example, the predicted score 515 is measured against the ground truth label 520 using a loss function 525. In this specific example, the loss function 525 is a binary cross entropy loss function.

Thus, a subsystem (comprising the representation learning model 245 and the payment risk indicator model 250) of an automated payment analytics system (for example, the analytics system 110) may be trained as follows.

An account representation may be generated by providing a beneficiary account embedding as input to the representation learning model 245. The beneficiary account embedding may be an embedding representing a set of electronic payments involving a beneficiary account. The beneficiary account is managed by an FI. A predicted payment risk indicator 515 may be generated by providing the account representation as input to the payment risk indicator model 250. A loss may be calculated, for example using a loss function 525, based on a difference between the predicted payment risk indicator 515 and a ground truth payment risk indicator 520. Gradient-backpropagation may be performed on the calculated loss.

The account representation may be generated by providing both the beneficiary account embedding and an originating account embedding as input to the representation learning model 245. The originating account embedding may be an embedding representing a set of electronic payments involving an originating account. The originating account may be managed by the same FI as the FI that manages the beneficiary account, or may be managed by a different FI from the FI that manages the beneficiary account.

Referring to Figures 6A and 6B, there is shown another example of a payment request processing pipeline 600. The payment request processing pipeline 600 may be implemented in the analytics system 110 described above with reference to Figure 1.

The payment request processing pipeline 600 corresponds generally to the example payment request processing pipeline 200 described above with reference to Figure 2.

The example payment request processing pipeline 600 starts with state in the form of a transaction stream 605.

In this specific example, the transaction stream 605 comprises five transactions.

A first transaction of the five transactions has TransactionlD "0001", timestamp "2024-01-01 20:32:14", OriginatorAccountld "0001", OriginatorBankld "1", BeneficiaryAccountld "0002", BeneficiaryBankld "2" and amount "173.00".

A second transaction of the five transactions has TransactionlD "0002", timestamp "2024-01-03 13:01:27", OriginatorAccountld "0003", OriginatorBankld "3", BeneficiaryAccountld "0001", BeneficiaryBankld "1" and amount "50.00".

A third transaction of the five transactions has TransactionlD "0003", timestamp "2024-01-07 08:46:51", OriginatorAccountld "0001", OriginatorBankld "1", BeneficiaryAccountld "0004", BeneficiaryBankld "2" and amount "50.00".

A fourth transaction of the five transactions has TransactionlD "0004", timestamp "2024-01-07 08:51:12", OriginatorAccountld "0004", OriginatorBankld "2", BeneficiaryAccountld "0003", BeneficiaryBankld "3" and amount "200.00".

A fifth transaction of the five transactions has TransactionlD "0005", timestamp "2024-01-07 09:14:54", OriginatorAccountld "0001", OriginatorBankld "1", BeneficiaryAccountld "0003", BeneficiaryBankld "3" and amount "2000.00".

In this example, the fifth transaction of the five transactions is the requested transaction. The originator has Accountld "0001" and the beneficiary has Accountld "0003".

In this example, the transaction stream 605 is split into a sub-stream 610 for the originator and a sub-stream 615 for the beneficiary.

The sub-stream 610 for the originator represents a transaction history for the originator. In this example, the transaction history for the originator terminates at the fifth transaction of the five transactions, having TransactionlD "0005".

The sub-stream 610 for the originator indicates that: for the first transaction, having TransactionlD "0001", the CounterpartyAccountID was "0002" and the Direction was "Outbound"; for the second transaction, having TransactionlD "0002", the CounterpartyAccountID was "0003" and the Direction was "Inbound"; for the third transaction, having TransactionlD "0003", the CounterpartyAccountID was "0004" and the Direction was "Outbound"; and for the fifth transaction, having TransactionlD "0005", the CounterpartyAccountID was "0003" and the Direction was "Outbound".

Similarly, the sub-stream 615 for the beneficiary represents a transaction history for the beneficiary. In this example, the transaction history for the beneficiary terminates at the fifth transaction of the five transactions, having TransactionlD "0005".

The sub-stream 615 for the beneficiary indicates that: for the second transaction, having TransactionlD "0002", the CounterpartyAccountID was "0001" and the Direction was "Outbound"; for the fourth transaction, having TransactionlD "0004", the CounterpartyAccountID was "0004" and the Direction was "Inbound"; and for the fifth transaction, having TransactionlD "0005", the CounterpartyAccountID was "0001" and the Direction was "Inbound".

The sub-stream 610 for the originator is provided as input to a generative embedding model 620-1 and the sub-stream 615 for the beneficiary is provided as input to a generative embedding model 620-2. In this example, the generative embedding models 620-1, 620-2 are the same model as each other. However, they are shown as separate models in Figures 6A and 6B for ease of understanding.

The generative embedding model 620-1 outputs an embedding 625 of Accountld "0001" at the fifth transaction, having TransactionlD "0005". Accountld "0001" corresponds to the account of the originator of the fifth transaction. In this example, the embedding 625 is an embedding vector having values [-0.73, 1.2, 0.13, -0.24].

The generative embedding model 620-2 outputs an embedding 630 of Accountld "0003" at the fifth transaction, having TransactionlD "0005". Accountld "0003" corresponds to the account of the beneficiary of the fifth transaction. In this example, the embedding 630 is an embedding vector having values [0.51, -0.28, 0.57, 0.22].

In this example, the embeddings 625, 630 are combined to generate a combined embedding 635 for the fifth transaction, having TransactionlD "0005". In this example, the combined embedding 635 is an embedding vector having values [-0.73, 1.2, 0.13, -0.24, 0.51, -0.28, 0.57, 0.22].

The combined embedding 635 is provided as input to a supervised representation learning layer 640. The supervised representation learning layer 640 outputs an originator and beneficiary fraud detection embedding 645. In this example, the originator and beneficiary fraud detection embedding 645 is an embedding vector having values [0.32, -0.76, -0.21, -0.89, 0.45, -0.25, 0.54, -0.29].

The originator and beneficiary fraud detection embedding 645 is provided as input to a classifier head switch 650.

The classifier head switch 650 also receives, as input, data 655 indicating that OriginatorBankld was "1" in the fifth transaction. Such data may be extracted from the transaction stream 605.

Based on the received data 655, the classifier head switch 650 selects a head 655 of a multi-headed classifier 660 that corresponds to OriginatorBankld "1".

In this example, the multi-headed classifier 660 has a head 660 corresponding to OriginatorBankld "2" and a head 665 corresponding to OriginatorBankld "3". However, the classifier head switch 650 does not select either of these heads 660, 665 in this example since the data 655 indicates that OriginatorBankld was "1", and not "2" or "3" in the fifth transaction.

In this example, the multi-headed classifier 660 outputs a risk indicator 670 in the form of a risk score 670 having a risk score of "0.831".

Thus, the analytics system 110 may be controlled by obtaining payment request data, such as the transaction data for the fifth transaction in the transaction stream 605. The payment request data may represent a requested electronic payment from an originating account (having Accountld "0001" in this example) to a beneficiary account (having Accountld "0003" in this example). The originating account and the beneficiary account are both managed by Fls. In this example, the originating account is managed by an FI having BankId "1", and the beneficiary account is managed by an FI having BankId "3". An FI that manages the originating account is identified. In this example, that is the FI having BankId "1". A head 655 of multi-head classifier 660 is selected to generate a payment risk indicator 670 for the requested electronic payment. In this example, the classifier head switch 650 selects the head 655. Different heads 655, 660, 665 of the multi-head classifier 660 are associated with different Fls. In this specific example, the (selected) head 655 is associated with the FI having BankId "1", which is the FI that manages the originating account. The payment risk indicator 670 for the requested electronic payment is generated using the selected head 655 of the multi-head classifier 660.

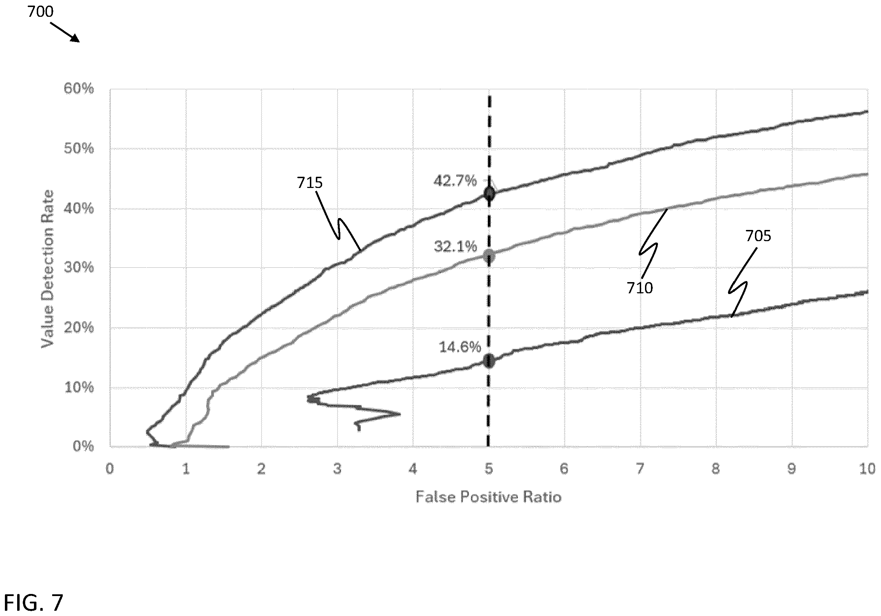

Referring to Figure 7, there is shown an example of a graph 700 representing detection performance in a real-time payment network.

In this example, the x-axis of the graph 700 represents false positive ratio. In this example, the y-axis of the graph 700 represents value detection rate.

A first plot 705 on the graph 700 represents example performance of an originator-only consortium Gradient Boosted Tree (GBT) model. A second plot 710 on the graph 700 represents example performance of an originator-and-beneficiary consortium GBT. A third plot 710 on the graph 700 represents example performance of an example decisioning system as described herein.

The graph 700 provides evidence of the improvement that example decisioning systems as described herein deliver to the technological field of fraud prevention in real-time payment networks. In this example, evaluated in a Proof-of-Concept (PoC) on real payment network data from a payments rail, an example decisioning system as described herein improves detection performance by ^{~}10%, as measured by value detection rate at 5:1 false positive ratio compared to a traditional GBT model operating on hand-engineered features that describe all transactions from both the originator and beneficiary accounts. An example decisioning system as described herein also improves detection performance by ^{~}28.1% compared to a traditional originator-only hand-engineered GBT model. Although value detection rate at 5:1 false positive ratio is used as an example key performance indicator (KPI) in this specific example, another KPI may be used to demonstrate the improved performance in other examples.

Various additional examples of additional differences over at least some existing systems will now be described.

An example of such an existing system trains different RNNs for different entity scopes in parallel using transaction labels. For example, a first RNN is trained in the scope of a card entity, and a second RNN is trained in the scope of a merchant entity. Embeddings are produced for different entities in different embedding spaces. Once the separate RNNs have been trained, with separate neural network weights and architectures, their outputs are combined using one of a variety of different techniques. A first example of such a combining technique is weighted averaging of the output scores of the RNNs in a combiner module. A second example of such a combining technique is ensembling of scores using a tertiary classifier trained to combine the scores to predict a fraud label. A third example of such a combining technique is ensembling of embeddings from the RNNs using a tertiary classifier trained to predict a fraud label using the RNN embeddings as inputs.

As explained above, some existing systems that use ML models for transaction fraud are deployed by individual banks and build behavioural profiles only for the originating account in a transaction. In contrast, example analytics systems and/or decisioning systems described herein may be deployed in a consortium or by a payments rail. Such analytics systems and/or decisioning systems may use behavioural embeddings for both the originating and beneficiary account simultaneously.

The example analytics systems and/or decisioning systems described herein may use only a single entity type, for example bank account. This differs from existing systems that consider multiple entity types, for example a credit card and a merchant.

The example analytics systems and/or decisioning systems described herein may use only a single sequential deep neural network, such as an RNN or transformer model, that is applied to two sub-sequences of events simultaneously. Thus, in accordance with examples, a sequential deep neural network segment may compute embeddings for both accounts in the same embedding space as each other.

The example analytics systems and/or decisioning systems described herein may train a single set of sequential deep neural network weights to generate bank account profiles. For example, a single set of RNN or transformer weights may be trained for a single model. The single model may be evaluated for two bank accounts simultaneously. This differs from existing systems that train multiple RNN models in parallel.

In addition, use of attention-based models, such as current state transformers, can use as many as five times as many parameters and up to ten times more time to train models for similar predictive applications. These additional constraints involve more processing capacity, leading to inefficient use of processors and greater carbon emissions. Research from the University of Massachusetts Amherst suggests that training a single Al model can emit over 284 tonnes of carbon dioxide. Reference is made in this connection to "Energy and Policy Considerations for Deep Learning in NLP" by Strubell et al. Efficiencies in model creation and training lead to a direct reduction in potential carbon emissions. Examples described herein can function without multiple parallel RNN model trains. By doing so, they create a more efficient method of Al development and processing consumption.

Examples described herein use various forms of self-supervised learning to train an embedding model. An example form of self-supervised learning that may be used in accordance with examples describe herein is generative autoregression. As also explained above the embedding model may comprise an RNN and/or transformer model. The embedding model may then be fine-tuned in part by supervised learning. This differs from existing systems that use supervised learning or unsupervised learning to train an RNN.

The example analytics systems and/or decisioning systems described herein may apply RNN and/or attention-mechanism approaches to transaction sequences of both originating and beneficiary account. This differs from existing systems in which RNN and/or attention-mechanism approaches are applied to a transaction sequence of an originating account only.

The example analytics systems and/or decisioning systems described herein may use a data stream for each account that includes both inbound and outbound transactions.

The example analytics systems and/or decisioning systems described herein may use transformer architectures in addition to, or instead of, RNN architectures.

The example analytics systems and/or decisioning systems described herein may use an adaptor neural layer between an RNN and a classification head to learn how to interpret an account representation for prediction in either an originator or beneficiary context.

The example analytics systems and/or decisioning systems described herein may use a multi-head classifier to personalise predictions for each of the participating Fls with their plurality of financial crime definitions.

Instead of using a multi-head classifier, Fls could, in principle, be required to use the same financial crime definitions as each other. Alternatively, different layers and/or models could be used for different Fls. However, by using a multi-head classifier as described herein, gradients may be propagated back to shared layers. This makes use of more data for transferrable representations.

In addition, generative embeddings may be evaluated for both an originating and a beneficiary bank account simultaneously. They may then also be used with a multi-headed classifier trained with a plurality of financial crime label definitions from different participants in a financial network.

The example analytics systems and/or decisioning systems described herein provide a functional improvement in the art of payment fraud detection. As explained above, experimental evidence for this is provided in Figure 7 as computed on real data by an example embodiment of an analytics system and/or decisioning switch such as that described above with reference to Figure 1.

While specific embodiments have been described in detail, it will be appreciated by those skilled in the art that the embodiments described in detail are not limiting on the scope of the claimed invention.

It will also be appreciated that optional features described hereinabove in respect of aspects, embodiments and examples apply equally, where technically appropriate, to other aspects, embodiments and examples. Where technically appropriate, aspects, embodiments and examples may be combined.

Methods described herein may be computer-implemented.

The aspects, embodiments and examples described herein each extend to a non-transitory computer-readable medium comprising instructions that, when executed by a processor, cause the processor to carry out any method described herein.

The aspects, embodiments and examples described herein each further extend to a computer software product comprising instructions that, when executed by a processor, cause the processor to carry out any method described herein.

In the context of this specification "comprising" is to be interpreted as "including".

Several aspects, variations and examples in accordance with the present disclosure are set out in the following numbered clauses.
1. A method of controlling an automated payment analytics system, the method comprising:
   obtaining payment request data, the payment request data representing a requested electronic payment from an originating account to a beneficiary account, the originating and beneficiary accounts both being maintained by financial institutions;
   obtaining, using the payment request data, state for the beneficiary account, the state for the beneficiary account being based on historical payments involving the beneficiary account;
   generating a beneficiary account embedding by providing the payment request data and the state for the beneficiary account as input to an embedding model;
   generating an account representation by providing the beneficiary account embedding as input to a representation learning model; and
   generating a payment risk indicator for the requested electronic payment by providing the account representation as input to a payment risk indicator model.
2. A method according to clause 1, wherein the embedding model has a sequential deep neural network architecture.
3. A method according to clause 1 or 2, wherein the embedding model comprises a recurrent neural network, RNN.
4. A method according to clause 3, wherein the state for the beneficiary account comprises RNN hidden state.
5. A method according to any of clauses 1 to 4, wherein the embedding model comprises a transformer.
6. A method according to any of clauses 1 to 5, wherein the state for the beneficiary account represents a set of historical payments involving the beneficiary account.
7. A method according to any of clauses 1 to 6, wherein the representation learning model comprises a feed-forward neural network, FNN.
8. A method according to clause 7, wherein the FNN comprises a multi-layer perceptron, MLP.
9. A method according to any of clauses 1 to 8, wherein the payment risk indicator model comprises a multi-head classifier.
10. A method according to clause 9, wherein different heads of the multi-head classifier are associated with different financial institutions, and wherein the method comprises:
   identifying a financial institution that maintains the originating account; and
   selecting a head of the multi-head classifier to generate the payment risk indicator for the requested electronic payment, wherein the selected head is associated with the identified financial institution,
   wherein the payment risk indicator is generated using the selected head of the multi-head classifier.
11. A method according to clause 9 or 10, wherein the payment risk indicator model comprises a plurality of MLPs.
12. A method according to any of clauses 1 to 11, wherein the state for the beneficiary account is based on historical inbound payments made to the beneficiary account.
13. A method according to any of clauses 1 to 12, wherein the state for the beneficiary account is based on historical outbound payments made from the beneficiary account.
14. A method according to any of clauses 1 to 13, comprising:
   obtaining, using the payment request data, state for the originating account, the state for the originating account being based on historical payments involving the originating account; and
   generating an originating account embedding by providing the payment request data and the state for the originating account as input to the embedding model,
   wherein the account representation is generated by providing the beneficiary account embedding and the originating account embedding as input to the representation learning model.
15. A method according to clause 14, wherein the state for the originating account is based on historical inbound payments made to the originating account.
16. A method according to clause 14 or 15, wherein the state for the originating account is based on historical outbound payments made from the originating account.
17. A method according to any of clauses 1 to 16, wherein the requested electronic payment is a real-time electronic payment.
18. A method according to any of clauses 1 to 17, wherein the automated payment analytics system is operated by a payments rail.
19. A method according to any of clauses 1 to 18, wherein the automated payment analytics system is in a payment network operating across multiple financial institutions.
20. A method of controlling an automated payment analytics system, the method comprising:
   obtaining payment request data, the payment request data representing a requested electronic payment from an originating account to a beneficiary account, the originating account and the beneficiary account both being managed by financial institutions;
   identifying a financial institution that manages the originating account;
   selecting a head of a multi-head classifier to generate a payment risk indicator for the requested electronic payment, wherein different heads of the multi-head classifier are associated with different financial institutions, and wherein the selected head is associated with the identified financial institution; and
   generating, using the selected head of the multi-head classifier, the payment risk indicator for the requested electronic payment.
21. An automated payment analytics system configured to perform a method according to any of clauses 1 to 20.
22. A method of training a subsystem of an automated payment analytics system, the subsystem comprising an embedding model, the method comprising:
   obtaining state for a beneficiary account, the state for the beneficiary account being based on electronic payments involving the beneficiary account;
   generating a set of forward embeddings by providing the state for the beneficiary account as input to a forward recurrent model; and
   using the set of forward embeddings to train the embedding model.
23. A method according to clause 22, wherein using the set of forward embeddings to train the embedding model comprises:
   predicting, using the set of forward embeddings, future payments involving the beneficiary account.
24. A method according to clause 22 or 23, comprising:
   generating a set of backward embeddings by providing the state for the beneficiary account as input to a backward recurrent model,
   wherein using the set of forward embeddings to train the embedding model comprises:
      using the set of forward embeddings and the set of backward embeddings to force the embedding model to generate embeddings that are:
      similar for payments that involve the same financial institution account as each other; and
      dissimilar for payments that involve different financial institution accounts from each other.
25. A method of training a subsystem of an automated payment analytics system, the subsystem comprising a representation learning model and a payment risk indicator model, the method comprising:
   generating an account representation by providing a beneficiary account embedding as input to the representation learning model, the beneficiary account embedding being an embedding representing a set of electronic payments involving a beneficiary account, the beneficiary account being managed by a financial institution;
   generating a predicted payment risk indicator by providing the account representation as input to the payment risk indicator model;
   calculating a loss based on a difference between the predicted payment risk indicator and a ground truth payment risk indicator; and
   performing gradient-backpropagation on the calculated loss.
26. A method according to clause 25, wherein the account representation is generated by providing the beneficiary account embedding and an originating account embedding as input to the representation learning model, the originating account embedding being an embedding representing a set of electronic payments involving an originating account, the originating account being managed by the or another financial institution.
27. A system configured to perform a method according to any of clauses 22 to 26.

## Claims

1. A method of controlling an automated payment analytics system, the method comprising:
obtaining payment request data, the payment request data representing a requested electronic payment from an originating account to a beneficiary account, the originating and beneficiary accounts both being maintained by financial institutions;
obtaining, using the payment request data, state for the beneficiary account, the state for the beneficiary account being based on historical payments involving the beneficiary account;
generating a beneficiary account embedding by providing the payment request data and the state for the beneficiary account as input to an embedding model;
generating an account representation by providing the beneficiary account embedding as input to a representation learning model; and
generating a payment risk indicator for the requested electronic payment by providing the account representation as input to a payment risk indicator model.

2. A method according to claim 1, wherein the embedding model:
has a sequential deep neural network architecture;
comprises a recurrent neural network, RNN; and/or
comprises a transformer.

3. A method according to claim 1 or 2, wherein:
the state for the beneficiary account represents a set of historical payments involving the beneficiary account; or
where the embedding model comprises an RNN, the state for the beneficiary account comprises RNN hidden state.

4. A method according to any of claims 1 to 3, wherein the representation learning model comprises a feed-forward neural network, FNN,
optionally wherein the FNN comprises a multi-layer perceptron, MLP.

5. A method according to any of claims 1 to 4, wherein the payment risk indicator model comprises a multi-head classifier,
optionally wherein the payment risk indicator model comprises a plurality of MLPs.

6. A method according to claim 5, wherein different heads of the multi-head classifier are associated with different financial institutions, and wherein the method comprises:
identifying a financial institution that maintains the originating account; and
selecting a head of the multi-head classifier to generate the payment risk indicator for the requested electronic payment, wherein the selected head is associated with the identified financial institution,
wherein the payment risk indicator is generated using the selected head of the multi-head classifier.

7. A method according to any of claims 1 to 6, wherein the state for the beneficiary account is based on:
historical inbound payments made to the beneficiary account; and/or
historical outbound payments made from the beneficiary account.

8. A method according to any of claims 1 to 7, comprising:
obtaining, using the payment request data, state for the originating account, the state for the originating account being based on historical payments involving the originating account; and
generating an originating account embedding by providing the payment request data and the state for the originating account as input to the embedding model,
wherein the account representation is generated by providing the beneficiary account embedding and the originating account embedding as input to the representation learning model,
optionally wherein the state for the originating account is based on:
historical inbound payments made to the originating account; and/or
historical outbound payments made from the originating account.

9. A method according to any of claims 1 to 8, wherein the requested electronic payment is a real-time electronic payment.

10. A method according to any of claims 1 to 9, wherein the automated payment analytics system:
is operated by a payments rail; and/or
is in a payment network operating across multiple financial institutions.

11. A method of controlling an automated payment analytics system, the method comprising:
obtaining payment request data, the payment request data representing a requested electronic payment from an originating account to a beneficiary account, the originating account and the beneficiary account both being managed by financial institutions;
identifying a financial institution that manages the originating account;
selecting a head of a multi-head classifier to generate a payment risk indicator for the requested electronic payment, wherein different heads of the multi-head classifier are associated with different financial institutions, and wherein the selected head is associated with the identified financial institution; and
generating, using the selected head of the multi-head classifier, the payment risk indicator for the requested electronic payment.

12. A method of training a subsystem of an automated payment analytics system, the subsystem comprising an embedding model, the method comprising:
obtaining state for a beneficiary account, the state for the beneficiary account being based on electronic payments involving the beneficiary account;
generating a set of forward embeddings by providing the state for the beneficiary account as input to a forward recurrent model; and
using the set of forward embeddings to train the embedding model.

13. A method according to claim 12, wherein using the set of forward embeddings to train the embedding model comprises:
predicting, using the set of forward embeddings, future payments involving the beneficiary account.

14. A method according to claim 12 or 13, comprising:
generating a set of backward embeddings by providing the state for the beneficiary account as input to a backward recurrent model,
wherein using the set of forward embeddings to train the embedding model comprises:
using the set of forward embeddings and the set of backward embeddings to force the embedding model to generate embeddings that are:
similar for payments that involve the same financial institution account as each other; and
dissimilar for payments that involve different financial institution accounts from each other.

15. A method of training a subsystem of an automated payment analytics system, the subsystem comprising a representation learning model and a payment risk indicator model, the method comprising:
generating an account representation by providing a beneficiary account embedding as input to the representation learning model, the beneficiary account embedding being an embedding representing a set of electronic payments involving a beneficiary account, the beneficiary account being managed by a financial institution;
generating a predicted payment risk indicator by providing the account representation as input to the payment risk indicator model;
calculating a loss based on a difference between the predicted payment risk indicator and a ground truth payment risk indicator; and
performing gradient-backpropagation on the calculated loss,
optionally wherein the account representation is generated by providing the beneficiary account embedding and an originating account embedding as input to the representation learning model, the originating account embedding being an embedding representing a set of electronic payments involving an originating account, the originating account being managed by the or another financial institution.
